# EUROPEAN PATENT APPLICATION

(11) **EP 1 443 175 A1**
(43) Date of publication of application: **04.08.2004**
(21) Application number: 03250610.7
(22) Date of filing: 31.01.2003
(51) Int. Cl.: E21B 43/10, F16L 13/14

(54) **Expandable casing with shape memory seal ring**

(71) Applicant: SHELL INTERNATIONALE RESEARCH MAATSCHAPPIJ B.V., 2596 HR Den Haag (NL)
(72) Inventor: Bosma, Martin Gerard Rene, 2288 GD Rijswijk (NL); Cornelissen, Erik Kerst, 2288 GD Rijswijk (NL); Dimitriadis, Klisthenis, 2288 GD Rijswijk (NL); Peters, Mike, 2288 GD Rijswijk (NL)

(57) **Abstract**

The invention relates to an expandable casing or liner element, which element comprises a tubular part of an expandable material and a sealing arranged on one end of the tubular part, which sealing comprises a shape memory alloy.

## Description

The invention relates to an expandable casing or liner element.

Expandable casings or liner elements are used to provide a monobore well with a casing or liner. The bore is drilled and subsequently expandable casing elements are placed one at a time into the bore or a string of elements connect to each other by a thread is placed into the bore and an expanding member is pushed through these elements for expanding the elements to the wall of the bore.

Such casings are known from for example WO 01/04520. Sealing of two casings is achieved by compressing elastomeric seal rings.

When expanding the elements, the connection between the elements is deformed resulting in impairment of the sealing of the connection of two elements. Also, the elastomeric seal rings are stretched by the expansion leaving less flexibility for the sealing function.

It is an object of the invention to provide an expandable casing or liner element, which eliminates or at least reduces the disadvantages of casing or liner elements according to the prior art.

This object is achieved by an expandable casing or liner element, which element comprises a tubular part of an expandable material and a sealing arranged on one end of the tubular part, which sealing comprises a shape memory alloy.

Shape Memory Alloys, such as Nickel Titanium, undergo a phase transformation in their crystal structure when cooled from the stronger, high temperature form (Austenite) to the weaker, low temperature form (Martensite). This inherent phase transformation is the basis for the unique properties of these kind of alloys.

When a shape memory alloy is in its martensitic form, it is easily deformed to a new shape. However, when the alloy is heated through its transformation temperatures, it reverts to austenite and recovers its previous shape with great force. This process is known as Shape Memory. The temperature at which the alloy remembers its high temperature form when heated can be adjusted by slight changes in alloy composition and through heat treatment. In the Nickel Titanium alloys, for instance, it can be changed from above +100 °C to below -100 °C. The shape recovery process occurs over a range of just a few degrees and the start or finish of the transformation can be controlled to within a degree or two if necessary.

So, shape memory alloys have the advantage that after deformation, they return to their original shape when heated. The shape memory alloy seal ring can thus be manufactured at the dimensions necessary for the final state. Then the ring can be deformed to other dimensions, in order to arrange the ring to the liner element. Then after expansion of the casing or liner elements according to the invention, the sealing can be heated in order to provide a good sealing between the two expanded casing elements.

It is known that shape memory alloys can be used as a sealing. In WO 95/24576 is a shape memory alloy sealing described. The sealing ring is manufactured at certain dimensions and then arranged around a first part. Then a second part is for example slid over the first part and the sealing is heated, such that it expands to its original dimensions and provides a sealing between the first and second part.

According to an embodiment of the invention the sealing is a ring arranged on the periphery of the one end of the tubular part.

Preferably the ring is arranged in a circumferential recess. This will provide a casing element with a smooth outer surface which has the advantage that while positioning the casing into the bore, the sealing will not be damaged.

In yet another embodiment, a second ring of a non-memory metal is arranged in the circumferential recess adjacent to the memory metal ring. When the casing is expanded, the non-memory metal ring is also deformed, as a result of which the ring will partially fill the recess, leaving less room for the sealing ring. The advantage is that the sealing ring is forced to expand more in radial direction, providing a better sealing action.

According to an embodiment of the element according to the invention, the shape memory alloy is nickel-titanium, copper-sink or copper-aluminium based.

In another embodiment of the element according to the invention the shape memory alloy is super elastic. These shape memory alloys could also show a super elastic behaviour if deformed at a temperature which is slightly above their transformation temperatures. This effect is caused by the stress-induced formation of some marten site above its normal temperature. Because it has been formed above its normal temperature, the marten site reverts immediately to unreformed austenite as soon as the stress is removed. This process provides a very springy, "rubberlike" elasticity in these alloys. These special properties provide a better sealing after expansion of an element according to the invention and do not need a heat source in order to provide the necessary sealing.

US-A-5 226 683 describes a connection of two parts, between which a ring of super elastic material is arranged. This ring is compressed and because of its super elastic properties, it will conform to the surfaces of both parts and thus provide a good sealing.

The invention relates also to a method for manufacturing an element according to the invention, which method comprises the steps:
- forming a sealing of a shape memory alloy having a main dimension, for example the diameter;
- providing a heat treatment to the sealing with a temperature above the austenitic transformation temperature of the alloy in order to set the dimensions of the sealing;
- providing an expandable tubular part;
- deforming the sealing to a different dimension at a temperature below the martensitic transformation temperature of the alloy to arrange the sealing at one end of the tubular part. This different dimension could be larger or smaller than the set main dimension.

By deformation of the sealing, this sealing is arranged to the expandable tubular part. After expansion of the tubular part, the sealing will try to return to it's originally set dimensions when heated. By properly dimensioning the sealing, the sealing will fasten itself between an already present tubular part and the just expanded part. This will provide a good sealing between two expanded casing elements.

The invention relates also to a method for providing in a well bore a casing or lining comprising a number of expandable elements according to the invention, which method comprises the steps of:
- arranging an expandable element in the well bore;
- expanding the element;
- heating the sealing of the expandable element to a temperature above the austenitic transformation temperature in order to enable the sealing to return to its set dimension.

So after expansion of the casing or liner elements according to the invention, the sealing can be heated in order to provide a good sealing between two expanded casing elements.

Expansion of the element is preformed according to the prior art with for example an expansion mandrel.

The expandable elements could be placed into the well bore one at the time, or as a string of connected expandable elements.

The heat for enabling the sealing to return to its set dimensions could originate from a chemical heat source, an electrical heath source or by conduction from a hot liquid.

These and other advantages and features of the invention will be elucidated in conjunction with the accompanying drawings.

Figures 1A and 1B show the manufacture of a casing or liner element according to the invention.

Figures 2A-2C show the different steps of arranging casing or liner elements according to the invention into a well bore.

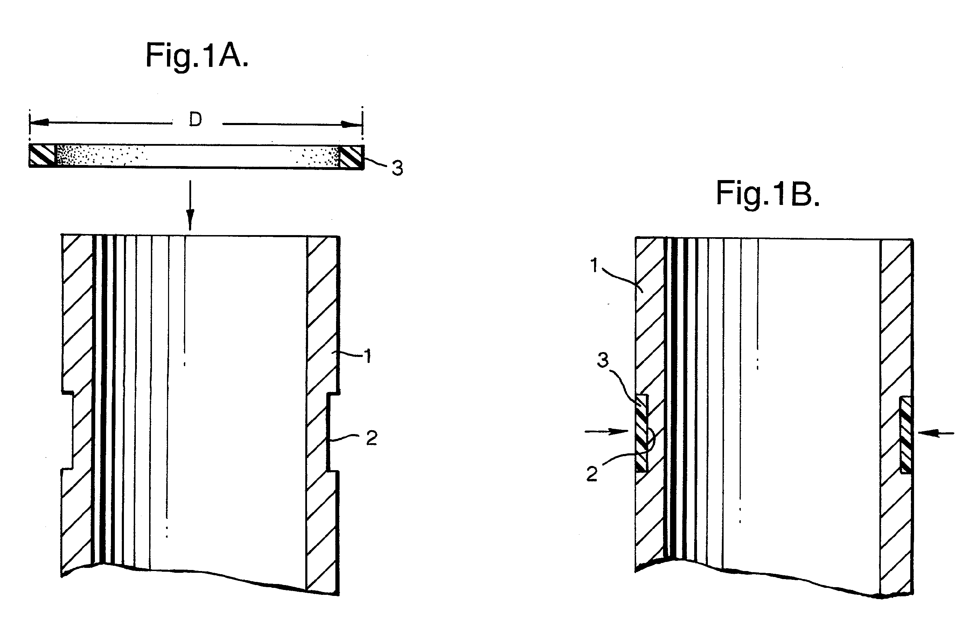

In figure 1A an end of a casing element 1 is shown. A peripheral recess 2 is present in the wall of casing 1.

A sealing ring 3 having a main dimension D, which corresponds to the diameter, is slid over the end of the casing 1. The sealing ring 3 is made of a shape memory alloy.

As shown in figure 1B, the sealing ring 3 is positioned near the recess 2 and deformed such that the sealing ring 3 is fully taken into the recess 2. By this deformation, the diameter of the sealing ring will be reduced, while the thickness of the ring is increased.

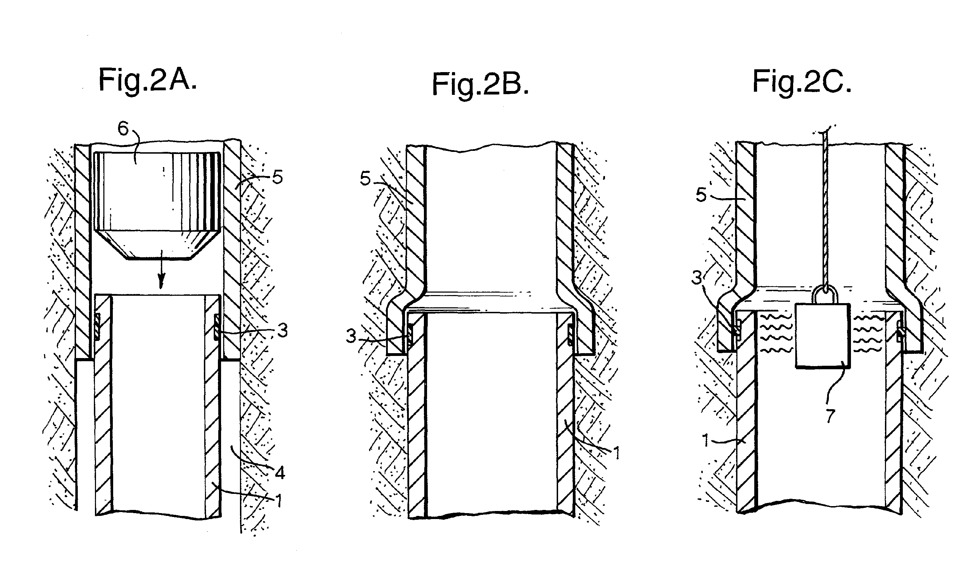

In figure 2A, a first step of a method according to the invention for arranging casing elements into a well bore 4 is shown. A non-deformed casing element 1 is moved past an already expanded casing element 5. When placed in the correct position an expansion mandrel 6 is moved through the well bore, in order to expand the non-expanded casing element 1.

As shown in figure 2B the casing element 1 is expanded to the same diameter as the expanded casing element 5. During this expansion, the sealing 3 is also deformed.

Following this expansion step, a heat source 7 is lowered into the well bore (see figure 2C) in order to heat the region of the seal ring 3 in order to enable the seal ring 3 to return to its initial dimensions, i.e. larger diameter and smaller thickness. As a result the seal ring 3 wedges itself between the two walls of the casing elements 1 and 5 resulting in a firm sealing.

## Claims

1. Expandable casing or liner element, which element comprises a tubular part of an expandable material and a sealing arranged on one end of the tubular part, which sealing comprises a shape memory alloy.

2. Element according to claim 1, wherein the sealing is a ring arranged on the periphery of the one end of the tubular part.

3. Element according to claim 2, wherein the ring is arranged in a circumferential recess.

4. Element according to any of the preceding claims, wherein the shape memory alloy is nickel-titanium, copper-zinc, or copper-aluminium based.

5. Element according to any of the preceding claims, wherein the shape memory alloy is super elastic.

6. Method for manufacturing an element according to any of the preceding claims, which method comprises the steps:
- forming a sealing of a shape memory alloy having a main dimension, for example the diameter;
- providing a heat treatment to the sealing with a temperature above the austenitic transformation temperature of the alloy in order to set the dimensions of the sealing;
- providing an expandable tubular part;
- deforming the sealing to at least a smaller dimension at a temperature below the martensitic transformation temperature of the alloy to arrange the sealing at one end of the tubular part.

7. Method for providing in a well bore a casing or lining comprising a number of expandable elements according to any of the claims 1-5, which method comprises the steps of:
- arranging an expandable element in the well bore;
- expanding the element;
- heating the sealing of the expandable element to a temperature above the austenitic transformation temperature in order to enable the sealing to return to its set dimensions.

8. Method according to claim 7, wherein the heat is provided from a chemical heat source, an electric heat source or by conduction from a hot liquid.
